# EUROPEAN PATENT SPECIFICATION

(11) **EP 2 599 647 B1**
(45) Date of publication and mention of the grant of the patent: **01.10.2014**
(21) Application number: 12194351.8
(22) Date of filing: 27.11.2012
(51) Int. Cl.: B60C 23/04

(54) **System for attaching an item to a pneumatic tire and method of securing an item to a pneumatic tire**
System zum Befestigen eines Artikels an einem Luftreifen, und Verfahren zur Befestigung eines Artikels an einem Luftreifen
Système pour fixer un article à un pneu et procédé de sécurisation d'un article à un pneu

(30) Priority: 29.11.2011 US 201113305879
(43) Date of publication of application: 05.06.2013
(73) Proprietor: The Goodyear Tire & Rubber Company, Akron, OH 44316-0001 (US)
(72) Inventor: Griffoin, Jean-Claude Patrice Philippe, L-9170 Mertzig (LU)
(74) Representative: Kutsch, Bernd

(56) References cited:
- EP-A1- 1 970 222
- EP-A2- 0 689 950
- US-A1- 2005 217 774
- US-B1- 6 885 291

## Description

### Field of Invention

The present invention relates generally to a pneumatic tire, and more particularly, a system and method for removably securing an item such as an electronic device to the pneumatic tire.

### Background of the Present Invention

The use of electronic devices or modules in tires enables numerous applications for acquiring, storing, and/or transmitting data for the purpose of monitoring the manufacture or logistics, and more generally, for informing an operator about the evolution of the tire's performance characteristics throughout the functional life of the tire.

An electronic monitoring module may comprise active components connected to an autonomous electrical energy supply, such as batteries or an inductive coupling system. The monitoring module may exchange information with an external module, which may serve as a user interface via radio waves, the frequency and power of which may be determined by specific transmission protocols. The module may generally be arranged inside a flexible or rigid protective cover intended to protect the electronic components from aggression related to external/internal shocks and the atmosphere inside the tire.

The conventional module, positioned inside the cavity formed by the tire once it is fitted on the wheel, may be arranged at a variety of locations. Thus, the module may be fixed to the valve, fixed on the wheel rim, fixed or bonded to an inside wall of the tire, or even integrated into the components of the tire. The choice between these locations may depend on the nature of the tire and the forces to which the tire may be subjected, on the nature of the module's energy source, on the information to be monitored, and on the accessibility desired for maintenance of the module.

One conventional method in arranges elastic pockets on the inside wall of the tire. However, these pockets are positioned after the tire has been completed. This requires another step of preparing the part of the surface which is to receive the support or elastic cavity and then bonding or vulcanizing the support onto that part of the surface.

EP-A-1 970 222 describes a system for securing an item to a pneumatic tire in accordance with the preamble of claim 1.

### Summary of the Present Invention

The invention relates to a system in accordance with claim 1, and to a method in accordance with claim 8.

Dependent claims refer to preferred embodiments of the invention.

A system comprising a pneumatic tire in accordance with the present invention includes an innerliner forming an internal cavity and an enveloping member. The innerliner maintains pneumatic pressure within the internal cavity. The enveloping member defines a pocket for removably receiving and removably securing an item to the pneumatic tire. The enveloping member is cured simultaneously with the innerliner to secure the enveloping member to the innerliner for the operational life of the pneumatic tire.

According to a preferred aspect of the pneumatic tire, the item is a wireless electronic module.

According to still another preferred aspect of the pneumatic tire, the item has a cylindrical shape.

According to yet another preferred aspect of the pneumatic tire, the enveloping member has a rectangular shape.

According to still another preferred aspect of the pneumatic tire, the item is part of a tire pressure monitoring system.

A method in accordance with a preferred aspect of the present invention secures an item to a pneumatic tire. The method comprises the steps of: providing a green tire and an uncured enveloping member; simultaneously curing the enveloping member to an innerliner of the green tire such that one edge and the interior of the enveloping member is not attached to the innerliner thereby forming a pocket; inserting an item into the pocket by moving the item in a first direction through a mouth defined by the one unattached end of the enveloping member and an adjacent portion of the innerliner; and subsequently removing the item from the pocket by moving the item in an opposite second direction through the mouth.

According to another preferred aspect of the method, the method further includes the step of balancing the pneumatic tire by inserting the item into the pocket.

According to still another preferred aspect of the method, the method further includes the step of positioning the enveloping member along a centerline of the pneumatic tire.

According to yet another preferred aspect of the method, the method further includes the step of securing the item in the pocket by deflecting of the one unattached edge of the enveloping member toward the innerliner.

According to still another preferred aspect of the method, the method further includes the step of reducing noise of the rotating pneumatic tire by inserting the item into the pocket.

A system in accordance with of the present invention secures an item to a pneumatic tire. The system includes an innerliner layer and an enveloping member defining a pocket for removably receiving and removably securing an item to the pneumatic tire. The enveloping member is cured simultaneously with the innerliner layer to secure the enveloping member to the innerliner layer for the operational life of the pneumatic tire. The enveloping member is simultaneously cured with the innerliner layer such that one edge and an interior of the enveloping member is not attached to the innerliner layer thereby forming a pocket. The pocket surrounds the item on at least two sides thereby securing the item to the pneumatic tire.

According to a preferred aspect of the system, the item is inserted into the pocket by moving the item in a first direction through a mouth defined by the one unattached end of the enveloping member and an adjacent portion of the innerliner layer.

According to still another preferred aspect of the system, the item is subsequently removed from the pocket by moving the item in an opposite second direction through the mouth.

According to yet another preferred aspect of the system, the enveloping member is shaped to correspond to a shape of the item.

The item is secured within the pocket by a deflection of the one unattached edge of the enveloping member toward the innerliner.

### Definitions

The following definitions are controlling for the disclosed invention.

"Inner" means toward the inside of the tire and "outer" means toward its exterior.

"Innerliner" means the layer or layers of elastomer or other material that form the inside surface of a tubeless tire and that contain the inflating fluid within the tire.

"Radial" and "radially" are used to mean directions radially toward or away from the axis of rotation of the tire.

### Brief Description of Drawings

The description below is intended to explain example embodiments of a tire according to the present invention, with reference to the figures, in which:
FIG. 1 shows a schematic partial cross-sectional view of a tire with an example attachment in accordance with the present invention; and
FIG. 2 shows a schematic partial cross sectional view of the example embodiment of FIG. 1 under a different condition.

### Detailed Description of Example Embodiments

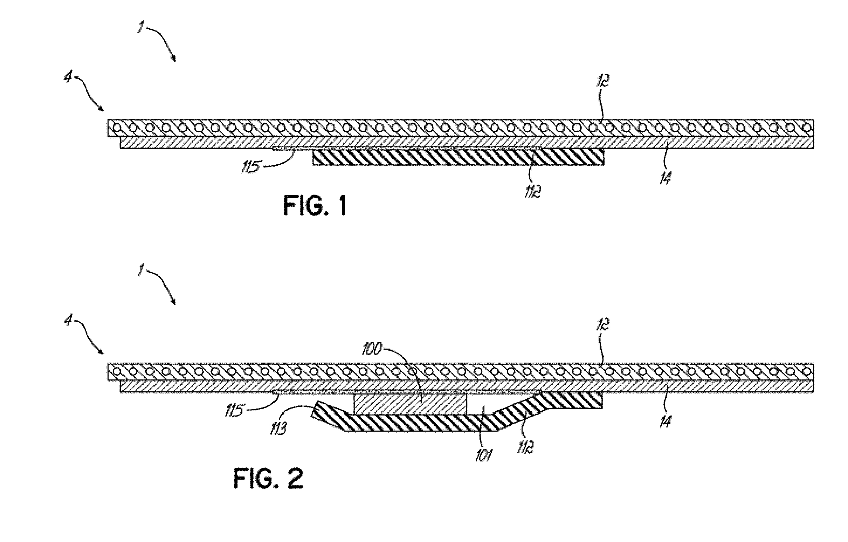

FIG. 1 is a partial cross-sectional view of an example pneumatic tire for use with the present invention. An example tire may be the tire disclosed by US-B-7,789,119. Another example tire may be mounted on a tire rim, designed to be capable of continued operation during inflated and/or uninflated conditions. The example tire may have a reinforcing carcass ply extending from one bead area of the tire to an opposing bead area. The ends of the carcass ply may be turned axially inward to axially outward about bead cores and bead apexes. Terminal ends of the carcass ply may extend past radially outer ends of the bead apexes thereby enveloping the bead apexes.

Located in each sidewall region of the example tire may be a sidewall insert. The sidewall insert may be alternatively disposed adjacent to a tire innerliner or axially outward of the carcass ply. The sidewall insert may be formed of elastomeric material and may extend from a crown area of the example tire, from radially inward of a belt reinforcement structure to radially inward of terminal ends of the bead apexes. The elastomeric material of the sidewall insert, or wedge, may be selected to provide the example tire with support during uninflated, or runflat, operation of the tire.

The tire may have a belt reinforcement structure disposed radially outward of the carcass ply. This structure may have at least two inclined crossed cord plies. The cords of the inclined plies may be inclined with respect to a circumferential direction of the example tire. The cords of radially adjacent plies may further be inclined at similar, but opposing, angles to each other.

Outward of the belt reinforcement structure may be an overlay. The overlay may have an axial width equal to, or greater than, a maximum axial width of the crossed cord plies of the belt reinforcement structure, thereby encapsulating the crossed cord plies between the overlay and the carcass ply. The overlay may be reinforced with cords inclined at angles of 0° - 15º relative to an eaquatorial plane of the example tire.

FIG. 1 shows an example partial cross-sectional view through a sidewall region 4 of a tire 1. The sidewall region 4 includes an innerliner 14 and a carcass ply 12. In accordance with the present invention, one or more electronic devices or other items 100 may be secured to the tire 1 by a pocket 101 or a bridge structure created by an enveloping member 112 which is also secured to the innerliner 14 of the tire. The pocket 101 may have an opening in one direction (FIG. 2) or in two opposite directions (not shown). The items 100 may be any shape, such as cylindrical, rectangular, spherical, etc. The enveloping members 112 may be any shape, such as circular, rectangular, pentagonal, etc. with one edge or one part of an edge unattached to the innerliner 14. The shape of the enveloping members 112 may correspond to the shape of the items 100.

The items 100 may be wireless pressure sensors, accelerometer, RFID's, pressure regulators, and/or modules and also balancing weights, foam for noise/vibration reduction, etc. Conventional methods typically involved gluing the sensors or other components to an innerliner, which necessitates preparation of the innerliner surface prior to applying the glue (e.g., cleaning by buffing or cleaning by chemicals or by laser/plasma, etc.).

Such an enveloping member 112 and item 100 may be used as part of a tire pressure monitoring system, an air maintenance tire, a reduced noise tire, a tire balancing method, etc. The enveloping member 112 may be secured to the innerliner 14 by simultaneous curing of the tire 1 with the enveloping member. No permanent adhesive and no cleaning or buffing of the surface of the innerliner is required thereby lowering cost of the tire 1, simplifying manufacturing of the tire, and improving balance of the tire. Further, the attachment of a module 100 by an enveloping member 112 in no way affects tire integrity while also allowing replacement of the module with no component modifications.

An enveloping member 112 may be positioned on the innerliner 14 along the tire centerline, radially outward of the bead area, in either shoulder area of the tire, etc. The enveloping member 112 may be oriented in order to form a pocket 101 opening in either or both radial directions, either or both axial directions, either or both circumferential directions, and/or any orientation therebetween. Thus, an enveloping member 112 may be placing anywhere inside the tire cavity and in any orientation. The enveloping member 112 may be sized for the item 100 to be secured.

As shown in FIG. 2, an outer edge 113 of the enveloping member 112 may deflect to partially or completely (not shown) close the pocket 101 to secure the item 100 from exiting the open end of the pocket. The item 100 may be removed at any time and replaced, as desired. By placing three or more enveloping members 112 on an innerliner 14, the position that optimizes tire balance may be selectively chosen for an item 100.

A green enveloping member 112 of the same material or similar material (e.g., ply material) as the innerliner 14 may be placed in a green tire and simultaneously cured with the green tire to produce such a structure. Preferably, a spacer member, or sticker 115 such as a Teflon® sheet, is located in the pocket 101 to temporarily secure the enveloping member 112 to the green tire before curing and to facilitate opening of the pocket after curing. The placement of the enveloping members 112 does not affect the cure cycle time as long as the enveloping members are not placed proximate to the point of least cure. The weight added to the tire 1 is in general negligible.

## Claims

1. A system for securing an item (100) to a pneumatic tire (1), the system comprising the pneumatic tire (1) and and the item (100), wherein the pneumatic tire comprises an innerliner (14) adjacent a tire cavity, and an enveloping member (112) defining a pocket (101) for removably receiving and removably securing the item (100) to the pneumatic tire (1), wherein the enveloping member (112) is at least locally co-cured with the innerliner (14) to permanently secure the enveloping member (112) to the innerliner (14), and wherein the pocket (101) surrounds or extends along the item (100) on at least two sides thereby securing the item (100) to the pneumatic tire (1), **characterized in that** the enveloping member (112) defines a pocket (101) with only one mouth and **in that** the item (100) is secured within the pocket (101) by a deflection of at least one unattached edge or side of the enveloping member (112) toward the innerliner (14).

2. The system of claim 1 wherein the item (1) is a wireless electronic module, a balancing weight or part of a tire pressure monitoring system.

3. The system of claim 1 or 2 wherein the item (1) has at least substantially a cylindrical shape.

4. The system of at least one of the previous claims wherein the enveloping member (112) has a rectangular shape in top view onto the innerliner (14), or wherein the enveloping member (112) has a sheet-like shape or a strip shape.

5. The system of at least one of the previous claims wherein the enveloping member (112) is made of rubber.

6. The system of at least one of the previous claims wherein the enveloping member (112) is made of innerliner rubber.

7. The system of at least one of the previous claims wherein the enveloping member (112) is shaped to correspond to a shape of the item (1).

8. A method for securing an item (100) to a pneumatic tire (1), the method comprising the steps of:
providing a green tire and an enveloping member;
simultaneously curing the enveloping member to an innerliner of the green tire such that at least one edge or side and at least a part of the interior of the cured enveloping member is not attached to the cured innerliner thereby forming a pocket (101) with only one mouth;
inserting an item into the pocket (101) or under the pocket by moving the item (100) in a first direction through the one mouth defined by the at least one unattached end or side of the enveloping member (112) and an adjacent portion of the cured innerliner (14);
securing the item within the pocket (101) by a deflection of at least one unattached edge or side of the cured enveloping member (112) toward the innerliner (14).

9. The method of claim 8 further comprising removing the item (100) from the pocket (101) by moving the item (100) in an opposite second direction through the mouth.

10. The method of claim 8 further including the step of balancing the pneumatic tire by inserting the item (100) into the pocket

11. The method of claim 8 further including the step of reducing noise of the rotating pneumatic tire by inserting the item (100) into the pocket.

12. The method of claim 8 further including the step of positioning the uncured enveloping member along a centerline of the green tire (1).

13. The method of claim 8 further comprising the step of providing a spacer member (115) in an area between the inner liner (14) and the enveloping member (112) prior to the curing of the enveloping member (112) to the innerliner (14), and further comprising the step of removing the spacer member (115) after the curing.

14. The method of claim 13 wherein the spacer member (115) is a Teflon® sheet.

## Patentansprüche

1. System zur Sicherung eines Gegenstandes (100) an einem Luftreifen (1), wobei das System den Luftreifen (1) und den Gegenstand (100) umfasst, wobei der Luftreifen eine Innenisolierung (14) benachbart zu einem Reifenhohlraum umfasst, und ein Hüllelement (112), das eine Tasche (101) zum entfernbar Aufnehmen und entfernbar Sichern des Gegenstandes (100) an dem Luftreifen (1) definiert, wobei das Hüllelement (112) mindestens örtlich zusammen mit der Innenisolierung (14) vulkanisiert ist, um das Hüllelement (112) permanent an der Innenisolierung (14) zu befestigen, und wobei die Tasche (101) den Gegenstand (100) an mindestens zwei Seiten umgibt oder sich an diesem entlang erstreckt und dadurch den Gegenstand (100) an dem Luftreifen (1) sichert, **dadurch gekennzeichnet, dass** das Hüllelement (112) eine Tasche (101) mit nur einer Öffnung definiert und dass der Gegenstand (100) durch ein Verbiegen mindestens eines unbefestigten Randes oder Seite des Hüllelements (112) zu der Innenisolierung (14) hin in der Tasche (101) gesichert ist.

2. System nach Anspruch 1, wobei der Gegenstand (1) ein drahtloses Elektronikmodul, ein Auswuchtgewicht oder Teil eines Reifendruckkontrollsystems ist.

3. System nach Anspruch 1 oder 2, wobei der Gegenstand (1) mindestens im Wesentlichen eine zylindrische Form aufweist.

4. System nach mindestens einem der vorgenannten Ansprüche, wobei das Hüllelement (112) in Draufsicht auf die Innenisolierung (14) eine rechteckige Form aufweist oder wobei das Hüllelement (112) eine plattenartige Form oder eine Streifenform aufweist.

5. System nach mindestens einem der vorgenannten Ansprüche, wobei das Hüllelement (112) aus Gummi besteht.

6. System nach mindestens einem der vorgenannten Ansprüche, wobei das Hüllelement (112) aus Innenisolierungsgummi besteht.

7. System nach mindestens einem der vorgenannten Ansprüche, wobei das Hüllelement (112) so geformt ist, dass es einer Form des Gegenstandes (1) entspricht.

8. Verfahren zur Sicherung eines Gegenstandes (100) an einem Luftreifen (1), wobei das Verfahren die Schritte umfasst des:
Bereitstellens eines Reifenrohlings und eines Hüllelements;
gleichzeitigen Vulkanisierens des Hüllelements an eine Innenisolierung des Reifenrohlings, sodass mindestens ein Rand oder eine Seite und mindestens ein Teil des Inneren des vulkanisierten Hüllelements nicht an der vulkanisierten Innenisolierung befestigt ist und dadurch eine Tasche (101) mit nur einer Öffnung bildet;
Einbringens eines Gegenstandes in die Tasche (101) oder unter die Tasche durch Bewegen des Gegenstandes (100) in eine erste Richtung durch die eine Öffnung, die durch das mindestens eine unbefestigte Ende oder Seite des Hüllelements (112) und einen benachbarten Teil der vulkanisierten Innenisolierung (14) definiert ist;
Sicherns des Gegenstandes in der Tasche (101) durch ein Verbiegen mindestens eines unbefestigten Randes oder Seite des vulkanisierten Hüllelements (112) hin zu der Innenisolierung (14).

9. Verfahren nach Anspruch 8, weiter das Entfernen des Gegenstandes (100) aus der Tasche (101) durch Bewegen des Gegenstandes (100) in einer entgegengesetzten zweiten Richtung durch die Öffnung umfassend.

10. Verfahren nach Anspruch 8, weiter den Schritt des Auswuchtens des Luftreifens durch Einbringen des Gegenstandes (100) in die Tasche umfassend.

11. Verfahren nach Anspruch 8, weiter den Schritt des Reduzierens des Geräuschs des rotierenden Luftreifens durch Einbringen des Gegenstandes (100) in die Tasche umfassend.

12. Verfahren nach Anspruch 8, weiter den Schritt des Positionierens des unvulkanisierten Hüllelements entlang einer Mittellinie des Reifenrohlings (1) umfassend.

13. Verfahren nach Anspruch 8, weiter den Schritt des Anbringens eines Abstandselements (115) in einem Bereich zwischen der Innenisolierung (14) und dem Hüllelement (112) vor dem Vulkanisieren des Hüllelements (112) an die Innenisolierung (14) umfassend, und weiter den Schritt des Entfernens des Abstandselements (115) nach dem Vulkanisieren umfassend.

14. Verfahren nach Anspruch 13, wobei das Abstandselement (115) ein Teflon®-Bogen ist.

## Revendications

1. Système pour fixer un article (100) à un bandage pneumatique (1), le système comprenant le bandage pneumatique (1) et l'article (100), dans lequel le bandage pneumatique comprend un calandrage intérieur (14) en position adjacente à une cavité de bandage pneumatique, et un membre faisant office d'enveloppe (112) définissant une poche (101) à des fins de réception amovible et de fixation amovible de l'article (100) au bandage pneumatique (1), dans lequel le membre faisant office d'enveloppe (112) est covulcanisé au moins localement avec le calandrage intérieur (14), et dans lequel le la poche (101) entoure l'article (100) ou s'étend le long de ce dernier sur au moins deux côtés pour ainsi fixer l'article (100) au bandage pneumatique (1), **caractérisé en ce que** le membre faisant office d'enveloppe (112) définit une poche (101) comprenant une seule ouverture, et **en ce que** l'article (100) est fixé au sein de la poche (101) via le fléchissement d'au moins un bord ou un côté non fixé du membre faisant office d'enveloppe (112) en direction du calandrage intérieur (14).

2. Système selon la revendication 1, dans lequel l'article (1) est un module électronique sans fil, un contrepoids ou une partie d'un système de surveillance de la pression du bandage pneumatique.

3. Système selon la revendication 1 ou 2, dans lequel l'article (1) possède une configuration cylindrique au moins de manière substantielle.

4. Système selon au moins une des revendications précédentes, dans lequel le membre faisant office d'enveloppe (112) possède une configuration rectangulaire dans une vue de sommet sur le calandrage intérieur (14) ou dans lequel le membre faisant office d'enveloppe (112) possède une configuration en forme de feuille ou une configuration en forme de bande.

5. Système selon au moins une des revendications précédentes, dans lequel le membre faisant office d'enveloppe (112) est réalisé en caoutchouc.

6. Système selon au moins une des revendications précédentes, dans lequel le membre faisant office d'enveloppe (112) est réalisé avec le caoutchouc du calandrage intérieur.

7. Système selon au moins une des revendications précédentes, dans lequel le membre faisant office d'enveloppe (112) est configuré pour correspondre à la configuration de l'article (1).

8. Procédé pour fixer un article (100) à un bandage pneumatique (1), le procédé comprenant les étapes consistant à :
procurer un bandage pneumatique non vulcanisé et un membre faisant office d'enveloppe ;
vulcaniser de manière simultanée le membre faisant office d'enveloppe à un calandrage intérieur du bandage pneumatique non vulcanisé de telle sorte qu'au moins un bord ou un côté et au moins une partie de l'intérieur du membre vulcanisé faisant office d'enveloppe ne sont pas fixés au calandrage intérieur vulcanisé pour ainsi former une poche (101) comprenant une seule ouverture ;
insérer un article dans la poche (101) en dessous de la poche en déplaçant l'article (100) dans une première direction à travers ladite une ouverture définie par ladite au moins une extrémité ou ledit au moins un côté non fixé du membre faisant office d'enveloppe (112) et une portion adjacente du calandrage intérieur vulcanisé (14) ;
fixer l'article au sein de la poche (101) via un fléchissement d'au moins un bord ou un côté non fixé du membre faisant office d'enveloppe (112) en direction du calandrage intérieur (14).

9. Procédé selon la revendication 8, comprenant en outre le fait de retirer l'article (100) de la poche (101) en déplaçant l'article (100) dans une deuxième direction opposée à travers l'ouverture.

10. Procédé selon la revendication 8, englobant en outre l'étape consistant à équilibrer le bandage pneumatique en insérant l'article (100) dans la poche.

11. Procédé selon la revendication 8, englobant en outre l'étape consistant à réduire le bruit du bandage pneumatique en rotation en insérant l'article (100) dans la poche.

12. Procédé selon la revendication 8, englobant en outre l'étape consistant à positionner le membre non vulcanisé faisant office d'enveloppe le long de l'axe du bandage pneumatique non vulcanisé (1).

13. Procédé selon la revendication 8, comprenant en outre l'étape consistant à procurer un membre (115) faisant office d'écarteur dans une zone ménagée entre le calandrage intérieur (14) et le membre faisant office d'enveloppe (112) avant la vulcanisation du membre faisant office d'enveloppe (112) au calandrage intérieur (14) et comprenant en outre l'étape consistant à retirer le membre (115) faisant office d'écarteur après la vulcanisation.

14. Procédé selon la revendication 13, dans lequel le membre (115) faisant office d'écarteur est une feuille de Téflon®.
